# EUROPEAN PATENT SPECIFICATION

(11) **EP 3 876 311 B1**
(45) Date of publication and mention of the grant of the patent: **18.01.2023**
(21) Application number: 20186517.7
(22) Date of filing: 17.07.2020
(51) Int. Cl.: H01M 4/13, H01M 4/133, H01M 4/134, H01M 4/139, H01M 4/1395, H01M 4/38, H01M 4/587, H01M 10/052

(54) **BATTERY MATERIAL AND PREPARATION METHOD THEREOF**
BATTERIEMATERIAL UND HERSTELLUNGSVERFAHREN DAFÜR
MATÉRIAU DE BATTERIE ET SON PROCÉDÉ DE PRÉPARATION

(30) Priority: 02.03.2020 TW 109106797
(43) Date of publication of application: 08.09.2021
(73) Proprietor: Spheretech Research Corp., Taipei City 10595 (TW)
(72) Inventor: LIN, Daniel, 338 Taoyuan City (TW); WANG, John-Sun, 104 Taipei City (TW)
(74) Representative: Perani & Partners S.p.A.

(56) References cited:
- KR-A- 20150 120 132
- TW-A- 201 225 385
- US-A1- 2010 297 502

## Description

### BACKGROUND OF THE INVENTION

### 1. Field of the Invention

The present disclosure relates to battery materials, and in particular to a battery material comprising silicon fibrous spheres and a preparation method for the battery material comprising silicon fibrous spheres.

### 2. Description of the Related Art

Power storage and use of battery are obvious indicators of growth and importance of global markets. A technological breakthrough is urgently required to meet the need for advanced power storage batteries applicable to future electric vehicles, solar power generation, and various consumer electronics products. In view of this, it is important to increase power storage performance per unit volume. In this regard, related prior art discloses using silicon carbon alloy powder and a polymeric material as a lithium battery negative terminal material.

To enhance the power storage performance of a battery material, the prior art discloses a preparation method for a battery material, which entails depositing crystalline silicon or amorphous silicon on a substrate at a high temperature to form a battery material, such that the deposited crystalline silicon or amorphous silicon attains a specific structure because of specific process conditions and substrate structure, thereby enhancing power storage performance.

TW 201603378 A discloses an electrode conducive to formation of a silicon-containing layer on a current collector, wherein silicon-containing particles are aligned in spaces defined between protruding portions, are in contact with the silicon-containing layer, but are not in contact with the current collector.

CN 102969529 A discloses a power storage device including: a film portion formed on a titanium plate by LPCVD and arranged in active substance layers, a root block formed on the titanium plate, and whiskers extending from the root block.

US 2013/0164612 A1 discloses a negative electrode including: a current collector including: a plurality of protrusion portions; and a base portion connected to the plurality of protrusion portions; and an active material layer on the current collector, wherein the protrusion portions and the base portion contain titanium, wherein top surfaces and side surfaces of the protrusion portions and a top surface of the base portion are covered with the active material layer, the active material layer includes a thin film portion in contact with one of the protrusion portions and a plurality of whiskers extending from the thin film portion, wherein the active material layer includes amorphous silicon, microcrystalline silicon, polycrystalline silicon, or a combination thereof.

EP 2741350 A1 discloses a negative electrode active material, comprising amorphous silicon oxide, crystalline silicon, carbon, metal silicide, one or more of which are included in spherical particles and whiskers.

JP 2017137239 A discloses a method for manufacturing a nanostructure, including depositing catalyst particles (for example, spherical copper nanoparticles) on a porous substrate (for example, graphite particles) and then growing a nanostructure from the catalyst particles, wherein the nanostructure includes polycrystalline silicon nano-whiskers. KR 20150120132 A relates to a battery material where a silicon nano wire layer is grown on an aluminum or copper substrate.

TW 201225385 A discloses a battery material with sphere-structure based on various silicides.

The power storage performance of the aforesaid conventional battery materials still has room for improvement.

### BRIEF SUMMARY OF THE INVENTION

An objective of the present disclosure is to provide a battery material and a preparation method thereof to further enhance the power storage of the battery material.

To achieve at least the above objective, the present disclosure provides a battery material, comprising: a conductive substrate; and a silicon material layer disposed on at least a side of the conductive substrate, wherein the silicon material layer comprises a plurality of silicon fibers, at least some of which aggregate to form a plurality of silicon fibrous spheres.

Regarding the battery material, the conductive substrate contains copper or aluminum.

Regarding the battery material, the conductive substrate is a copper foil or an aluminum foil.

Regarding the battery material, the silicon material layer is disposed on two sides of the conductive substrate.

Regarding the battery material, the silicon material layer is further doped with boron or phosphorus.

Regarding the battery material, the diameter of the silicon fibrous spheres ranges from 1 µm to 100 µm.

Regarding the battery material, the thickness of the silicon material layer ranges from 1 µm to 400 µm.

To achieve at least the above objective, the present disclosure further provides a preparation method for the battery material, comprising the steps of:
(a) providing a conductive substrate;
(b) providing a silicon-based material, followed by depositing on a surface of the silicon-based material a film comprising amorphous silicon or crystalline silicon to form a silicon source material;
(c) placing the silicon source material of step (b) on at least a side of the conductive substrate of step (a), wherein a distance between the conductive substrate and the silicon source material is less than 100 mm; and
(d) heating the conductive substrate and silicon source material thus arranged in step (c) to allow the silicon source material to release amorphous silicon or crystalline silicon, so as to deposit a silicon material layer on the conductive substrate.

Regarding the preparation method for the battery material, in step (c), the distance between the conductive substrate and the silicon source material ranges from 0.01 mm to 100 mm.

The preparation method for the battery material further comprises step (e) of providing a silicon source gas, and a boron source gas or a phosphorus source gas while heating the conductive substrate and silicon source material thus arranged in step (c).

Regarding the preparation method for the battery material, the silicon source gas is silane (SiH4) to increase thickness of the silicon material layer.

Regarding the preparation method for the battery material, the phosphorus source gas is phosphine (PH3) to increase conductivity of the battery material.

Regarding the preparation method for the battery material, the conductive substrate contains copper or aluminum.

Regarding the preparation method for the battery material, the conductive substrate is a copper foil or an aluminum foil.

Regarding the preparation method for the battery material, the silicon-based material is a silicon wafer or a silicon film.

Regarding the preparation method for the battery material, step (c) entails placing the silicon source material of step (b) on two sides of the conductive substrate of step (a).

Regarding the preparation method for the battery material, step (d) further entails heating the conductive substrate and silicon source material thus arranged in step (c) at 300-700°C.

Regarding the preparation method for the battery material, the silicon material layer formed in step (d) comprises a plurality of silicon fibers, at least some of which aggregate to form a plurality of silicon fibrous spheres.

Regarding the preparation method for the battery material, the diameter of a plurality of silicon fibrous spheres included in the silicon material layer formed in step (d) ranges from 1 µm to 100 µm.

Regarding the preparation method for the battery material, the thickness of the silicon material layer formed in step (d) ranges from 1 µm to 400 µm.

The battery material of the present disclosure has silicon fibrous spheres with unique structure and thus is free from inherent limits of crystalline silicon-based materials to thereby effectively enhance the performance of batteries made of the battery material and effectively reduce the chance of rapid reduction in the service life of the batteries due to their alternating between charging and discharging by exchange between silicon and lithium ion. The batteries made of the battery material of the present disclosure according to the present disclosure have longer service life than conventional commercially-available batteries. Furthermore, the battery material of the present disclosure greatly increases the area of exchange between lithium ion and silicon and effectively enhances the power capacity and service life of the batteries made of the battery material.

### BRIEF DESCRIPTION OF THE DRAWINGS

FIG. 1 is a schematic view of a battery material of the present disclosure.
FIG. 2 is a flowchart of a preparation method for the battery material according to the present disclosure.
FIG. 3 is a schematic view of step (c) of the preparation method for the battery material according to the present disclosure.
FIG. 4 is a picture taken with a scanning electron microscope SEM) of a silicon material layer of the battery material prepared according to an embodiment of the present disclosure.
FIG. 5 is a picture taken with a scanning electron microscope (SEM) of the silicon material layer of the battery material prepared according to an embodiment of the present disclosure.
FIG. 6 is a schematic view of the silicon material layer of the battery material prepared according to an embodiment of the present disclosure.
FIG. 7 is a picture taken with a scanning electron microscope (SEM) of the silicon material layer of the battery material prepared according to an embodiment of the present disclosure.

### DETAILED DESCRIPTION OF THE INVENTION

To facilitate understanding of the object, characteristics and effects of this present disclosure, embodiments together with the attached drawings for the detailed description of the present disclosure are provided.

The present disclosure provides a battery material.

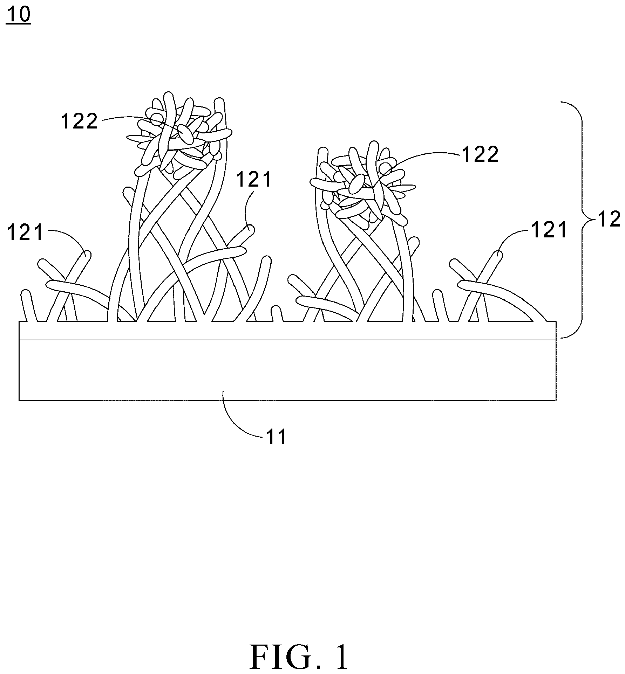

Referring to FIG. 1, a battery material 10 of the present disclosure comprises: a conductive substrate 11; and a silicon material layer 12 disposed on at least one side of the conductive substrate 11 and comprising a plurality of silicon fibers 121, wherein at least some of the silicon fibers 121 aggregate to form a plurality of silicon fibrous spheres 122.

In an embodiment, the conductive substrate contains copper or aluminum. The conductive substrate is a copper foil or an aluminum foil. However, the present disclosure is not limited thereto, as persons skilled in the art can choose, as needed, any other appropriate conductive material as a conductive substrate.

In an embodiment, the silicon material layer is disposed on two sides of the conductive substrate to further enhance the performance of batteries made of the battery material. However, the present disclosure is not limited thereto. In a variant embodiment, the silicon material layer is disposed on just one side of the conductive substrate.

In an embodiment, the silicon material layer is further doped with boron or phosphorus to increase the conductivity of the battery material. However, the present disclosure is not limited thereto. In a variant embodiment, the silicon material layer does not contain boron or phosphorus.

In an embodiment, the silicon fibrous spheres are of a diameter of 1 µm - 100 µm, and the silicon material layer is of a thickness of 1 µm - 400 µm. However, the present disclosure is not limited thereto, as persons skilled in the art can control, as needed, process conditions to attain the required diameter of the silicon fibrous spheres and the required thickness of the silicon material layer.

The present disclosure further provides a preparation method for the battery material.

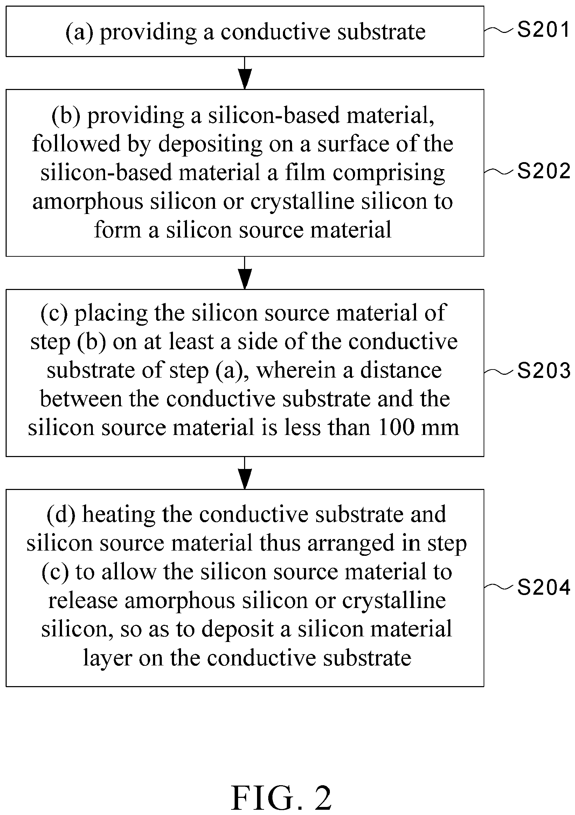

Referring to FIG. 2, the preparation method for the battery material according to the present disclosure comprises the steps of: (a) providing a conductive substrate S201; (b) providing a silicon-based material, followed by depositing on a surface of the silicon-based material a film comprising amorphous silicon or crystalline silicon to form a silicon source material S202; (c) placing the silicon source material of step (b) on at least a side of the conductive substrate of step (a), wherein a distance between the conductive substrate and the silicon source material is less than 100 mm S203; and (d) heating the conductive substrate and silicon source material thus arranged in step (c) to allow the silicon source material to release amorphous silicon or crystalline silicon, so as to deposit a silicon material layer on the conductive substrate S204.

The present disclosure is not restrictive of the choice of the conductive substrate in step (a), and thus persons skilled in the art can choose various conventional conductive substrates as needed. In an embodiment, the conductive substrate contains copper or aluminum. In an embodiment, the conductive substrate is preferably a copper foil or an aluminum foil. Preferably, the conductive substrate is sheet-shaped or film-shaped. However, the present disclosure is not limited thereto.

The present disclosure is not restrictive of the choice of the silicon-based material in step (b), and thus persons skilled in the art can choose various conventional silicon-based material as needed. In an embodiment, the silicon-based material is a silicon wafer or a silicon film. Preferably, the silicon-based material is sheet-shaped or film-shaped. However, the present disclosure is not limited thereto.

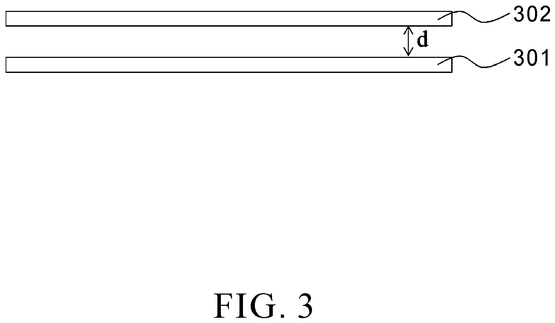

In step (c), the silicon source material of step (b) is placed on at least one side of the conductive substrate of step (a). In an exemplary embodiment, the arrangement in step (c) is shown in FIG. 3, wherein the silicon source material 302 is disposed on one side of the conductive substrate 301, and a distance d of 0.01 mm - 100 mm is defined between the conductive substrate 301 and the silicon source material 302. Referring to FIG. 3, preferably, the conductive substrate 301 and the silicon source material 302 are sheet-shaped or film-shaped and parallel to each other. However, the present disclosure is not limited thereto. In an exemplary embodiment illustrated by FIG. 3, the silicon source material is disposed on one side of the conductive substrate; consequently, a silicon material layer is deposited on one side of the conductive substrate and faces the silicon source material in step (d). In another preferred embodiment, the silicon source material is disposed on two sides of the conductive substrate, and thus a silicon material layer is deposited on two sides of the conductive substrate in step (d).

The present disclosure is not restrictive of the step (d) of heating the conductive substrate and silicon source material thus arranged in step (c) to allow the silicon source material to release amorphous silicon or crystalline silicon, so as to deposit a silicon material layer on the conductive substrate. In a variant embodiment, a conventional Low Pressure Chemical Vapor Deposition (LPCVD) apparatus enables the silicon source material to release some of the crystalline silicon or amorphous silicon at 300-700°C, so as to deposit a silicon material layer on the conductive substrate. In an embodiment, step (d) further entails providing a boron source material or a phosphorus source material, so as to dope boron or phosphorus in the course of depositing the silicon material layer. However, the present disclosure is not limited thereto, as persons skilled in the art can provide, as needed, a material which contains any other element to be doped in the silicon material layer.

In step (d), the silicon source material and the conductive substrate, which are covered with a film comprising amorphous silicon or crystalline silicon, are adjacent to each other, so as to generate a non-bonding interacting force between the silicon source material and the conductive substrate and thus allow the silicon material layer to grow on the conductive substrate along the force field direction, thereby forming silicon fibers. Furthermore, since the distance between the silicon source material and the conductive substrate ranges from 0.01 mm to 100 mm, it is feasible to form silicon fibrous spheres and thus enhance the characteristics of the prepared battery material, thereby allowing batteries made of the battery material to attain long service life and high power capacity. In an embodiment, the silicon fibrous spheres are of a diameter of 1 µm - 100 µm, and the silicon material layer is of a thickness of 1 µm - 400 µm. However, the present disclosure is not limited thereto, as persons skilled in the art can control, as needed, process conditions (for example, temperature rising speed and temperature keeping duration in the heating process of step (d)) to attain the required diameter of the silicon fibrous spheres and the required thickness of the silicon material layer.

The preparation method for the battery material further comprises the step: (e) providing a silicon source gas, and a boron source gas or a phosphorus source gas while heating the conductive substrate and silicon source material thus arranged in step (c). However, the present disclosure is not limited thereto. In a variant embodiment, step (e) is dispensed with.

In step (e), the silicon source gas is silane (SiH4) to increase the thickness of the silicon material layer. However, the present disclosure is not limited thereto, as persons skilled in the art can choose any other appropriate silicon source gas as needed. In step (e), the phosphorus source gas is phosphine (PH3) to increase the conductivity of the battery material. However, the present disclosure is not limited thereto, as persons skilled in the art can provide, as needed, a gas which contains any other element to be doped in the silicon material layer.

### Embodiment

This embodiment relates to preparing the battery material of the present disclosure with the preparation method for the battery material according the present disclosure. Steps used in this embodiment are briefly described as follows: step (a) involves using a copper foil as a conductive substrate; step (b) involves using a silicon wafer as a silicon-based material and depositing a film comprising amorphous silicon or crystalline silicon on the surface of the silicon-based material so as to form a silicon source material; step (c) involves placing the silicon source material of step (b) on a side of the conductive substrate of step (a), wherein the distance between the conductive substrate and the silicon source material is less than 20 mm; step (d) involves heating the conductive substrate and silicon source material thus arranged in step (c) with a conventional Chemical Vapor Deposition (CVD) apparatus at 600°C for 240 minutes; and step (e) involves introducing silane (SiH4) at a flow rate of 400 sccm and phosphine (PH₃) at a flow rate of 300 sccm at 600°C for 240 minutes.

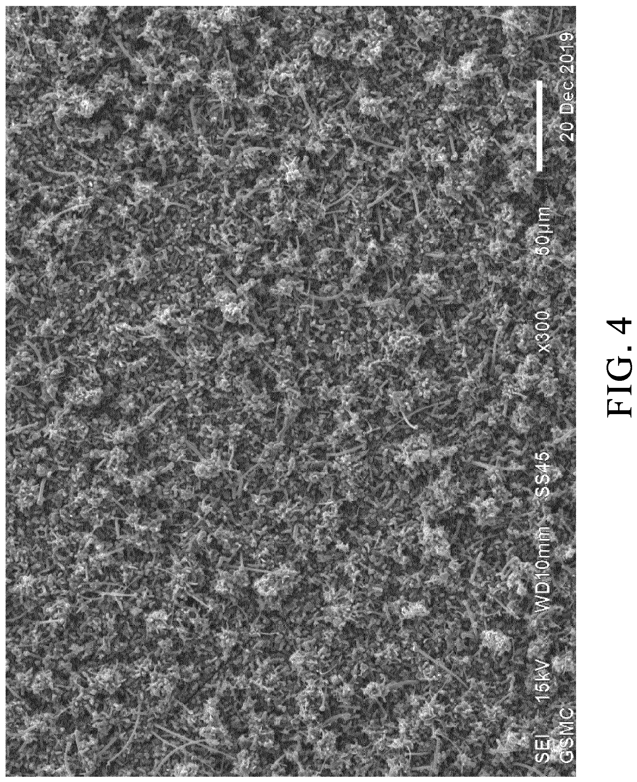

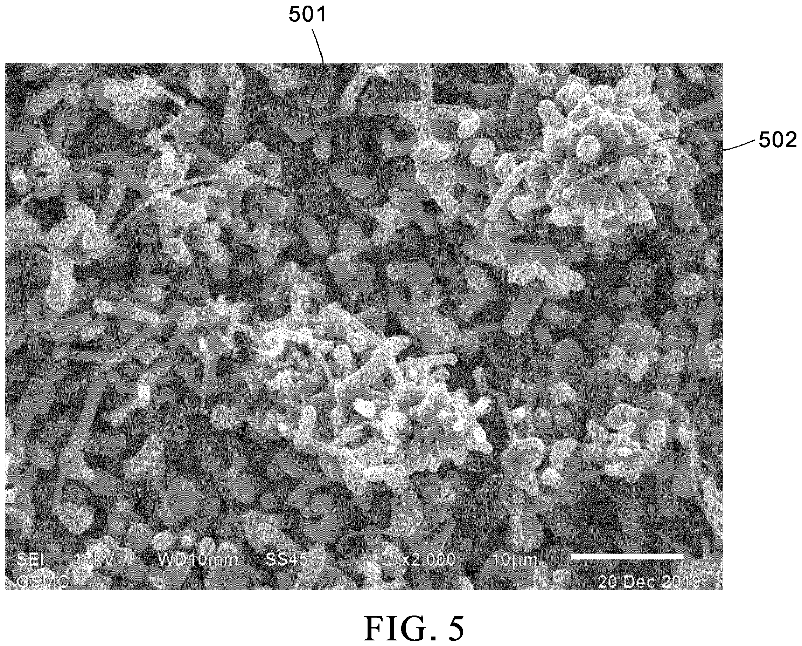

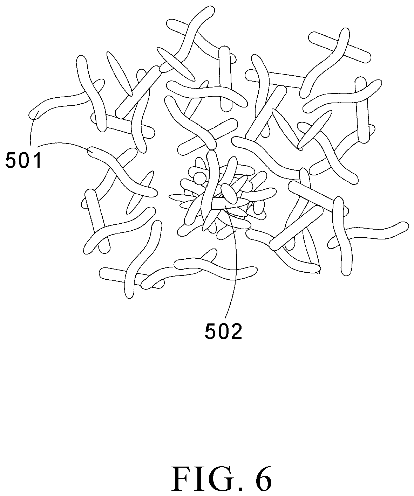

Referring to FIG. 4, FIG. 5 and FIG. 6, pictures taken of the battery material with a scanning electron microscope (SEM) (FIG. 4 and FIG. 5) and the schematic view of FIG. 6 show that the silicon material layer of the battery material in this embodiment comprises a plurality of silicon fibers 501, and at least some of the silicon fibers 501 aggregate to form a plurality of silicon fibrous spheres 502.

### Comparative Embodiment

The comparative embodiment is substantially based on the preparation method for the battery material according to the present disclosure, but in its step (c) the distance between the conductive substrate and the silicon source material is greater than 100 mm. In the comparative embodiment, the preparation method comprises: step (a) of using a copper foil as a conductive substrate; step (b) of using a silicon wafer as a silicon-based material and depositing on the surface of the silicon-based material a film comprising amorphous silicon or crystalline silicon to form a silicon source material; step (c) of placing the silicon source material of step (b) on one side of the conductive substrate of step (a), wherein the distance between the conductive substrate and silicon source material is 105 mm; and step (d) of heating the conductive substrate and silicon source material thus arranged in step (c) with a conventional Chemical Vapor Deposition (CVD) apparatus at 600°C for 240 minutes; and step (e) introducing silane (SiH₄) at a flow rate of 400 sccm and phosphine (PH₃) at a flow rate of 300 sccm at 600°C for 240 minutes.

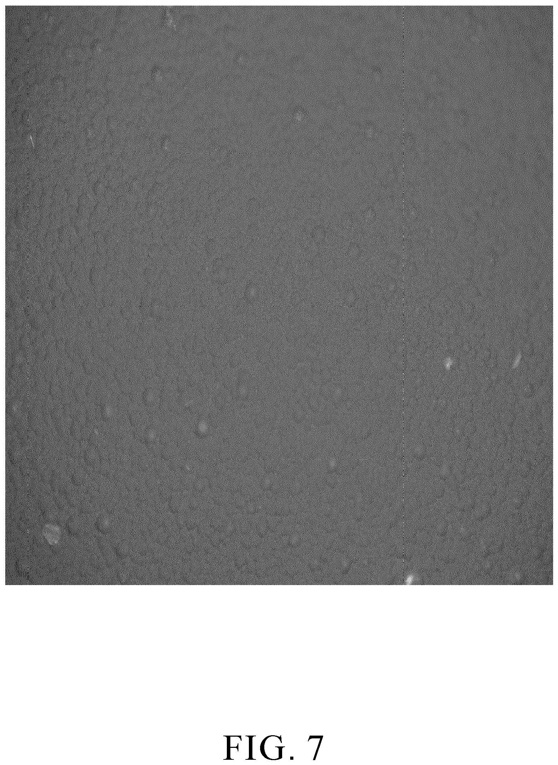

Referring to FIG. 7, a picture taken of the battery material of the comparative embodiment with a scanning electron microscope (SEM) shows that the battery material of the comparative embodiment is advantageous in that both the silicon fibers and silicon fibrous spheres are absent from the silicon material layer, because the distance between the conductive substrate and silicon source material is greater than 100 mm in step (c).

### Testing Embodiment

Under the same preparation and testing conditions, batteries are made of the battery materials of the embodiment and the comparative embodiment, respectively. Regarding the power storage level, the batteries made of the battery material of the embodiment have around 10 times more discharge power capacity than the batteries made of the battery material of the comparative embodiment. Furthermore, regarding the power storage level, the batteries made of the battery material of the embodiment have a discharge power capacity equal to 399% that of the batteries made of commercially-available Panasonic graphite electrode material.

The preparation and testing conditions are described below.

The battery material of both the embodiment and the comparative embodiment as well as the commercially-available Panasonic graphite electrode material are used as a negative terminal material. The material is cut into pieces each of a size of 1 cm x 1 cm. The coating thickness of the Panasonic graphite electrode material and the thickness of the silicon material layer of the battery material of the embodiment and the comparative embodiment are 130 - 140 µm. The aforesaid three battery materials are packaged in button batteries by conventional technology.

Under the same preparation and testing conditions, the button batteries prepared by the aforesaid method are tested. Despite a mere change in the negative terminal material, the batteries made of the battery material of the embodiment have around 10 times more discharge power capacity than the batteries made of the battery material of the comparative embodiment in terms of the power storage level, whereas the batteries made of the battery material of the embodiment have a discharge power capacity equal to 399% that of the batteries made of commercially-available Panasonic graphite electrode material in terms of the power storage level.

Therefore, according to the present disclosure, silicon fibrous spheres contained in the silicon material layer of the battery material greatly increase the area of exchange between lithium ion and silicon and thus effectively enhance the power capacity and service life of batteries made of the battery material.

While the present disclosure has been described by means of specific embodiments, numerous modifications and variations could be made thereto by those skilled in the art without departing from the scope of the present disclosure set forth in the claims.

## Claims

1. A battery material (10), comprising:
a conductive substrate (11); and
a silicon material layer (12) disposed on at least a side of the conductive substrate (11),
wherein the silicon material layer (12) comprises a plurality of silicon fibers (121), at least some of which aggregate to form a plurality of silicon fibrous spheres (122).

2. The battery material of claim 1, wherein the conductive substrate (11) contains copper or aluminum.

3. The battery material of claim 2, wherein the conductive substrate (11) is a copper foil or an aluminum foil.

4. The battery material of claim 1, wherein the silicon material layer (12) is disposed on two sides of the conductive substrate (11).

5. The battery material of claim 1, wherein the silicon material layer (12) is further doped with boron or phosphorus.

6. The battery material of claim 1, wherein the silicon fibrous spheres (122) are of a diameter of 1 µm - 100 µm.

7. The battery material of claim 1, wherein the silicon material layer (12) is of a thickness of 1 µm - 400 µm.

8. A preparation method for the battery material of claim 1, comprising the steps of:
(a) providing a conductive substrate (S201);
(b) providing a silicon-based material, followed by depositing on a surface of the silicon-based material a film comprising amorphous silicon or crystalline silicon to form a silicon source material (S202);
(c) placing the silicon source material of step (b) on at least a side of the conductive substrate of step (a), wherein a distance between the conductive substrate and the silicon source material is less than 100 mm (S203); and
(d) heating the conductive substrate and silicon source material thus arranged in step (c) to allow the silicon source material to release amorphous silicon or crystalline silicon, so as to deposit a silicon material layer on the conductive substrate (S204).

9. The preparation method for the battery material according to claim 8, further comprising the step of:
(e) providing a silicon source gas, and a boron source gas or a phosphorus source gas while heating the conductive substrate and silicon source material thus arranged in step (c).

10. The preparation method for the battery material according to claim 8, wherein step (d) further entails heating the conductive substrate and silicon source material thus arranged in step (c) at 300-700°C.

## Patentansprüche

1. Batteriematerial (10), umfassend:
ein leitfähiges Substrat (11); und
eine Siliziummaterialschicht (12), die auf mindestens einer Seite des leitfähigen Substrats (11) angeordnet ist,
wobei die Siliziummaterialschicht (12) eine Vielzahl von Siliziumfasern (121) umfasst, von denen sich zumindest einige aggregieren, um eine Vielzahl von Siliziumfaserkugeln (122) zu bilden.

2. Batteriematerial nach Anspruch 1, wobei das leitfähige Substrat (11) Kupfer oder Aluminium enthält.

3. Batteriematerial nach Anspruch 2, wobei das leitfähige Substrat (11) eine Kupferfolie oder eine Aluminiumfolie ist.

4. Batteriematerial nach Anspruch 1, wobei die Siliziummaterialschicht (12) auf zwei Seiten des leitfähigen Substrats (11) angeordnet ist.

5. Batteriematerial nach Anspruch 1, wobei die Siliziummaterialschicht (12) ferner mit Bor oder Phosphor dotiert ist.

6. Batteriematerial nach Anspruch 1, wobei die Siliziumfaserkugeln (122) einen Durchmesser von 1 µm - 100 µm aufweisen.

7. Batteriematerial nach Anspruch 1, wobei die Siliziummaterialschicht (12) eine Dicke von 1 µm - 400 µm aufweist.

8. Herstellungsverfahren für das Batteriematerial nach Anspruch 1, umfassend die Schritte:
(a) Bereitstellen eines leitfähigen Substrats (S201);
(b) Bereitstellen eines Materials auf Siliziumbasis, gefolgt von Abscheiden eines Films, der amorphes Silizium oder kristallines Silizium umfasst, auf einer Oberfläche des Materials auf Siliziumbasis, um ein Siliziumquellenmaterial (S202) zu bilden;
(c) Platzieren des Siliziumquellenmaterials aus Schritt (b) auf mindestens einer Seite des leitfähigen Substrats aus Schritt (a), wobei ein Abstand zwischen dem leitfähigen Substrat und dem Siliziumquellenmaterial weniger als 100 mm (S203) beträgt; und
(d) Erhitzen des leitfähigen Substrats und des Siliziumquellenmaterials, die in Schritt (c) so angeordnet worden sind, um dem Siliziumquellenmaterial zu ermöglichen, amorphes Silizium oder kristallines Silizium freizusetzen, um eine Siliziummaterialschicht auf dem leitfähigen Substrat (S204) abzuscheiden.

9. Herstellungsverfahren für das Batteriematerial nach Anspruch 8, ferner umfassend den Schritt:
(e) Bereitstellen eines Siliziumquellengases und eines Borquellengases oder eines Phosphorquellengases, während das leitfähige Substrat und das in Schritt (c) so angeordnete Siliziumquellenmaterial erhitzt werden.

10. Herstellungsverfahren für das Batteriematerial nach Anspruch 8, wobei Schritt (d) ferner das Erhitzen des leitfähigen Substrats und des in Schritt (c) so angeordneten Siliziumquellenmaterials auf 300-700°C mit sich bringt.

## Revendications

1. Matériau de batterie (10), comprenant :
un substrat conducteur (11) ; et
une couche de matériau de silicium (12) disposée sur au moins un côté du substrat conducteur (11),
dans lequel la couche de matériau de silicium (12) comprend une pluralité de fibres de silicium (121), dont au moins certaines s'agrègent pour former une pluralité de sphères fibreuses de silicium (122).

2. Matériau de batterie de la revendication 1, dans lequel le substrat conducteur (11) contient du cuivre ou de l'aluminium.

3. Matériau de batterie de la revendication 2, dans lequel le substrat conducteur (11) est une feuille de cuivre ou une feuille d'aluminium.

4. Matériau de batterie de la revendication 1, dans lequel la couche de matériau de silicium (12) est disposée sur deux côtés du substrat conducteur (11).

5. Matériau de batterie de la revendication 1, dans lequel la couche de matériau de silicium (12) est en outre dopée avec du bore ou du phosphore.

6. Matériau de batterie de la revendication 1, dans lequel les sphères fibreuses de silicium (122) ont un diamètre de 1 µm à 100 µm.

7. Matériau de batterie de la revendication 1, dans lequel la couche de matériau de silicium (12) a une épaisseur de 1 µm à 400 µm.

8. Procédé de préparation pour le matériau de batterie de la revendication 1, comprenant les étapes de :
(a) fournir un substrat conducteur (S201) ;
(b) fournir un matériau à base de silicium, puis déposer sur une surface du matériau à base de silicium un film comprenant du silicium amorphe ou du silicium cristallin pour former un matériau source de silicium (S202) ;
(c) placer le matériau source de silicium de l'étape (b) sur au moins un côté du substrat conducteur de l'étape (a), dans lequel une distance entre le substrat conducteur et le matériau source de silicium est inférieure à 100 mm (S203) ; et
(d) chauffer le substrat conducteur et le matériau source de silicium ainsi disposés à l'étape (c) pour permettre au matériau source de silicium de libérer du silicium amorphe ou du silicium cristallin, de façon à déposer une couche de matériau de silicium sur le substrat conducteur (S204).

9. Procédé de préparation pour le matériau de batterie selon la revendication 8, comprenant en outre l'étape de :
(e) fournir un gaz source de silicium, et un gaz source de bore ou un gaz source de phosphore tout en chauffant le substrat conducteur et le matériau source de silicium ainsi disposés à l'étape (c).

10. Procédé de préparation pour le matériau de batterie selon la revendication 8, dans lequel l'étape (d) comporte en outre chauffer le substrat conducteur et le matériau source de silicium ainsi disposés à l'étape (c) à 300-700 °C.
